# EUROPEAN PATENT APPLICATION

(11) **EP 2 667 022 A2**
(43) Date of publication of application: **27.11.2013**
(21) Application number: 13162512.1
(22) Date of filing: 05.04.2013
(51) Int. Cl.: F03D 7/04

(54) **Method and system for wind velocity field measurements on a wind farm**

(30) Priority: 22.05.2012 US 201213477514
(71) Applicant: Siemens Aktiengesellschaft, 80333 München (DE)
(72) Inventor: Medina, Paul F., Boulder, 80302 (US); Obrecht, John M., Louisville, 80027 (US)

(57) **Abstract**

A method and system is provided for determining a wind velocity field on a wind farm having of a plurality of spatially distributed wind turbines (10). The method and system acquires data via measurement instruments (20, 22) that convey energy along respective paths (30) between selected pairs of turbines (10) and acquire data from the conveyed energy. From the acquired data, a wind velocity field is determined.

## Description

### FIELD OF THE INVENTION

The invention relates to a method and system for wind-velocity field measurements on a wind farm to allow for operation and control, performance analysis, and output power forecasting of a wind farm.

### BACKGROUND OF THE INVENTION

Wind power generation is directly linked to weather conditions. Forecasting of wind resources of a wind farm is used to improve the value of wind power. There are a number of methods to collect wind data and forecast the wind-resources and the output power of a wind-farm.

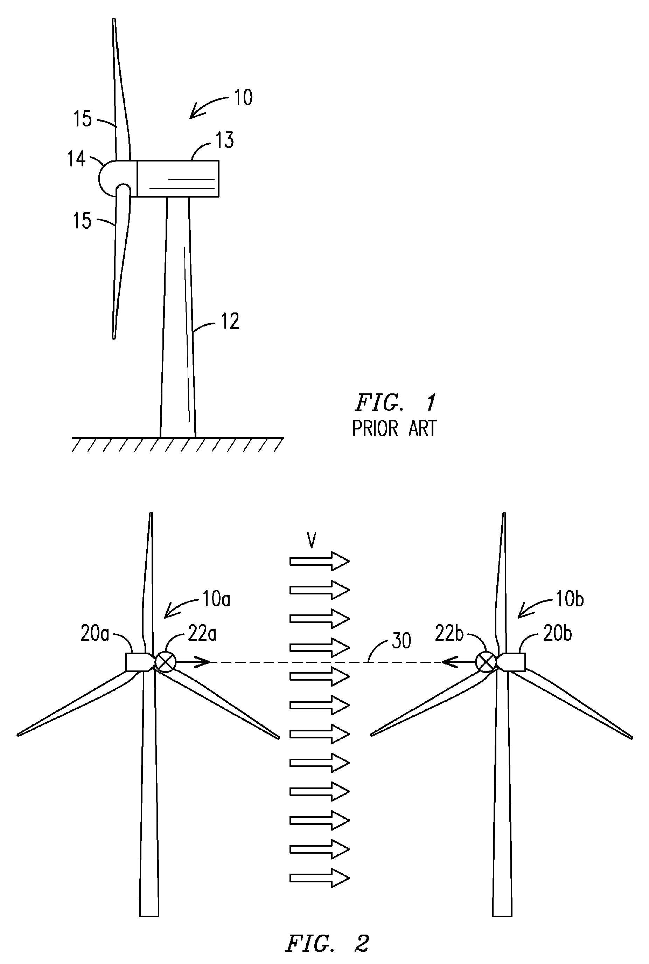

In a conventional manner, as shown in FIG. 1, an assembled wind turbine 10 includes a tower 12, a nacelle 13 and a rotor including a hub 14 with rotor blades 15. The nacelle 13 is rotatably mounted on the tower 12 around a yawing axle (not shown). A yaw control motor (not shown) is located between the tower 12 and the nacelle 13 to yaw the nacelle based on wind direction. Wind farms are created when multiple wind turbines are placed in the same geographic area for the purpose of generating large amounts of electrical power.

Wind resources play a significant role in the power generation for turbines and farms. As a result, wind measurements are taken in conjunction with the operation of the turbines in order to analyze and optimize power production capabilities. Typical direct wind measurement instruments (not shown) include one or more of an anemometer (to measure wind velocity), wind vane (to measure wind direction), thermometers (to measure ambient air temperature), and barometers (to measure air pressure). These instruments are mounted on the turbine typically at hub height or on one or more meteorological masts located nearby. However, the measurement of wind speed and turbulence performed with a typical cup anemometer mounted on a turbine can be influenced by different sources of error such as flow distortion.

New ground-based 3D remote sensing technologies such as LIDAR (Light Detection and Ranging) and SODAR (Sonic Detection and Ranging) for wind observations have also become available. The Doppler-shifted frequency is directly proportional to wind speed. However, LIDAR devices, in particular, are relatively expensive to purchase and both devices draw significantly more power than conventional anemometry, so for remote sites a local, off-grid power supply solution would be needed. LIDAR also has the disadvantage that the averaging volume increases with height.

Wind measurement instruments are generally part of larger measurement systems that further include, for example, transducers, signal conditioners, recorders, and/or communication devices. The instruments typically measure signals at a predetermined sampling rate which can be a function of the data recording and collection system. Typical data recording and collection systems include data loggers or data acquisition using computers. Data produced by the data recording and collection system is analyzed to provide a number of useful results for the operation of the wind farm.

Short-term data-sets collected can be transformed to power output forecasts via site-specific models. The data sets may also be combined with long-term data sets to be used by a computer-learning-system or modeling system such as numerical weather prediction (NWP) models for performance analysis and output forecasting of a wind farm. The meteorological variables that are input to such systems include wind speed and direction, but also possibly temperature, pressure and humidity.

With the inherent variability of the wind resource, there is a need in the art for a system and method to provide an alternative to the current wind measurement systems that will positively contribute to the accuracy of wind-prediction and wind-forecasting for turbine control and for power production forecasts.

### BRIEF DESCRIPTION OF THE DRAWINGS

The invention is explained in the following description in view of the drawings that show:
FIG. 1 is a schematic drawing depicting a typical assembled wind turbine.
FIG. 2 is an illustration of two turbines having laser-Doppler anemometry instruments measuring wind speed there between in accordance with an embodiment of the invention.
FIGS. 3a - 3c illustrate calculated vector components and graphical analysis of the measurements taken in the embodiment of FIG. 2.
FIG. 4 is an illustration of three turbines having laser-Doppler anemometry instruments measuring wind speed there between in accordance with another embodiment of the invention.
FIG. 5a - 5c illustrates calculated wind speed and direction and a graphical analysis of the measurements taken in the embodiment of FIG. 4.
FIG. 6 illustrates three turbines having laser-Doppler anemometry instruments measuring wind speed at a fourth centrally located turbine in accordance with another embodiment of the invention.
FIG. 7 illustrates a graphical simulation of added noise in the calculation.
FIG. 8 illustrates an example of a network established as a 2D mesh of triangular elements illustrating a set of possible measurements between a plurality of neighboring turbines over a wind farm to approximately reconstruct a 2-dimensional wind-velocity field in accordance with another embodiment of the invention.
FIG. 9 illustrates an example of a network comprising additional turbines connected in a network in accordance with another embodiment of the invention.
FIG. 10 illustrates a 3-dimensional (3D) wind-velocity field between three turbines in accordance with another embodiment of the invention.
FIG. 11 illustrates the use of laser-Doppler anemometry instruments to deduce wind measurements of a turbine affected by interfering wake effect in accordance with another embodiment of the invention.

### DETAILED DESCRIPTION OF THE INVENTION

A method and system for wind-velocity field measurements on a wind farm to allow for operation and control, performance analysis, and output power forecasting of a wind farm is provided. The method and system can use Doppler-based anemometry (e.g., Laser Doppler Anemometry (LDA), Laser Doppler Velocimetry (LDV), Sonic Anemometry) to equip a network of wind turbines of a wind farm with optical and/or acoustic instrumentation to measure wind speeds, and/or temperatures over large distances.

Traditionally, the Doppler Effect refers to a shift in the frequency of a wave that is emitted (or reflected) by a moving source relative to a stationary receiver (or vice versa). In the present invention, both the source and the receiver are stationary, and the medium between them is in motion. Pairs of instruments are used to measure the speed of the medium between them, either in the frequency domain or the time domain.

By selectively mounting instruments on a plurality of turbines on the wind-farm such that the instruments are aimed at neighboring turbines, a "network" of turbines is created. Each networked turbine collects information on the speed of the wind along a path between itself and a neighboring networked turbine. By acquiring data from a network of turbines rather than at a single point, an entire wind farm's velocity field (limited only by the height of the turbines) can be vectorially-reconstructed.

FIG. 2 illustrates the concept of measuring wind speed between a pair of neighboring turbines. As shown therein, the two turbines 10a, 10b are equipped with Doppler anemometry instruments 20a, 20b mounted on or about their towers, with each instrument pointed toward the other turbine. The instruments may be based upon laser/light or sonic energy, for example in various embodiments. Laser Doppler Anemometry will be discussed below as exemplary. For these laser based instruments, the lasers may be frequency-locked lasers pointed rigidly towards the other turbine using standard atomic-vapor laser-locking techniques, or other frequency-locking techniques that are standard to the industry. Other embodiments may utilize a reflector on one turbine such that the energy is emitted from one tower, transverses the distance between the towers twice, and is then received on the same turbine from which it was emitted.

Each turbine is also equipped with optical sensors 22a, 22b (e.g., photodetector, receiver) that receive the laser light of the neighboring turbine. The laser light interacts with the medium between the two turbines (in this case the wind) in such a way that the frequency of the laser light is either increased (when aligned with the wind) or decreased (when aligned against the wind). Several known effects may contribute to this frequency shift, be it Rayleigh scattering, Mie scattering, Fresnel drag, or any other Doppler-like effect.

Laser interferometry (or atomic spectroscopy) may then be used to determine the extent of the frequency shift, which is known to be proportional to the speed of the wind along the path 30 joining the two turbines. This can be accomplished via standard atomic-vapor spectroscopy or other frequency shift measurement techniques standard to the industry. Each turbine of the networked pair can provide a measurement to allow for two measurements for greater accuracy. This technique provides a measurement of the average wind speed along the path 30 joining the pair of turbines 10a, 10b. One will appreciate that a measurement of an average wind speed along a path between two turbines can be a more accurate representation of a wind resource than is a point measurement of wind speed due to local variations in the wind speed, and can also allow for a spatial averaging that eliminates small-scale variations in the wind that may hamper point measurements.

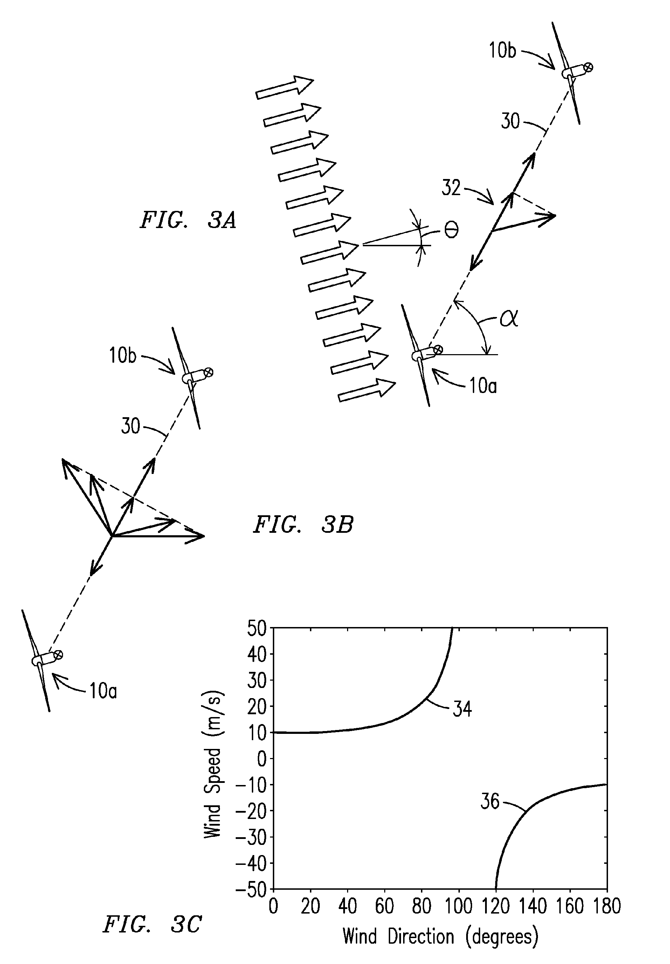

Figure 3a shows that the measured quantity is a projection 32 of the full wind speed (having, for example, a direction defined by angle θ) onto the line 30 joining the two turbines 10a, 10b at a direction defined by angle α. Figure 3b shows that this projection may be the result of several different possible wind speeds at several different incoming angles. Without additional information, the measurement of the average wind speed along a single line between two turbines does not allow for a reconstruction of the true wind speed. Furthermore, the direction of the wind cannot be determined from such a single measurement. Figure 3c shows this graphically, in which the true wind speed and wind direction for the measured quantity projected along the direction of the line between the turbines could result from any point along the lines 34, 36. With only a single measurement, the direction and speed of the wind are not known without having other measurements. To reconstruct an original velocity vector (such as the original wind velocity), more than one component vector is needed. Reconstruction can then be accomplished by simple vector addition or other known vector techniques.

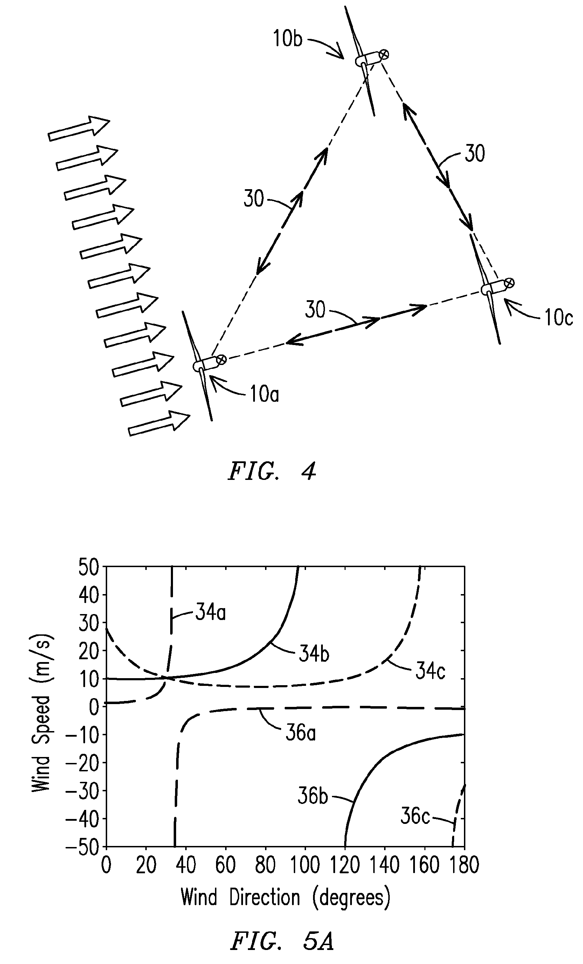

FIG. 4 shows the addition of one more turbine 10c to the network so that its wind measurement instrument adds another dimension to the measurements. Each turbine 10a, 10b, 10c is now equipped with two outbound lasers (not shown), and two sets of optical sensors (not shown), such that measurements can be made along each line joining the neighboring turbines. Measurements are made that provide information on the speed of the wind along each line 30 connecting the three turbines 10a, 10b, 10c. The measured quantity is again a projection of the full wind speed onto the line 30 joining respective pairs of turbines.

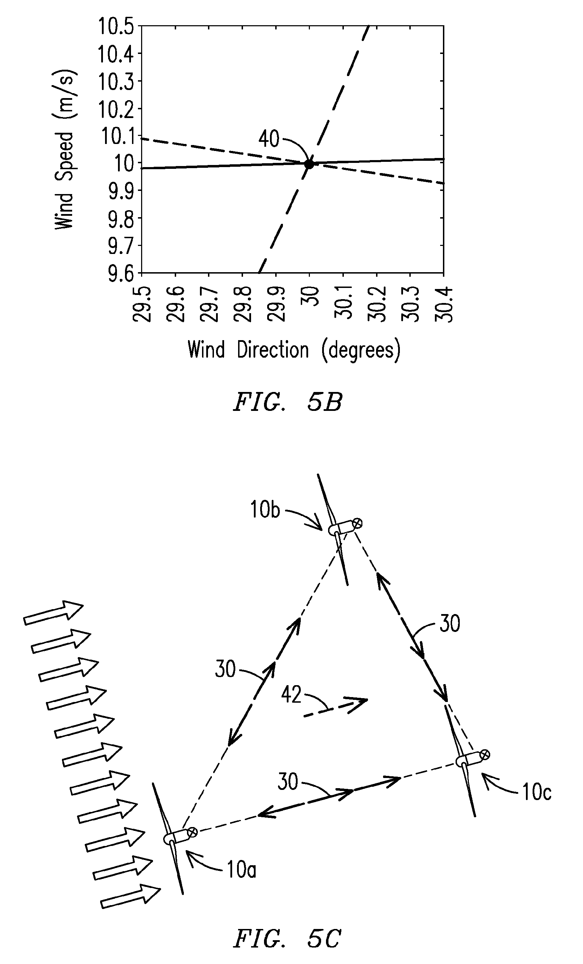

If measurements are taken between all three turbines, a new set of possible solution lines arising from each projected measurement between respective turbines (34a/36a, 34b/36b, 34c/36c) is shown in the graph of FIG. 5a. When plotted together, the zoomed view of the graph in FIG. 5b shows that the solution lines all intersect at a single point 40. This intersection point provides the speed and direction of the original wind velocity vector and is a true measure of the wind speed and direction influencing the three turbines. Arrow 42 in FIG. 5c represents the reconstructed vector quantity for the original wind velocity (speed and direction) derived from the measurements made along each line 30 connecting the three turbines 10a, 10b, 10c.

This measurement method can be extended to infer the wind speed and direction of a turbine located within the area defined by the three neighboring turbines such as a central turbine 10d. By incorporating the measurements from three neighboring turbines 10a, 10b,10c, the speed and direction of the wind at the central turbine 10d can be inferred. Advantageously, this method provides a quality measurement of the local wind speed and direction in the vicinity of the central turbine 10d, eliminating the need for a turbine-mounted anemometer / wind vane device on that turbine. Acquiring measurements of wind speeds that incorporate data from a large area surrounding a turbine, as opposed to a single point measurement (as is done presently), is also advantageous.

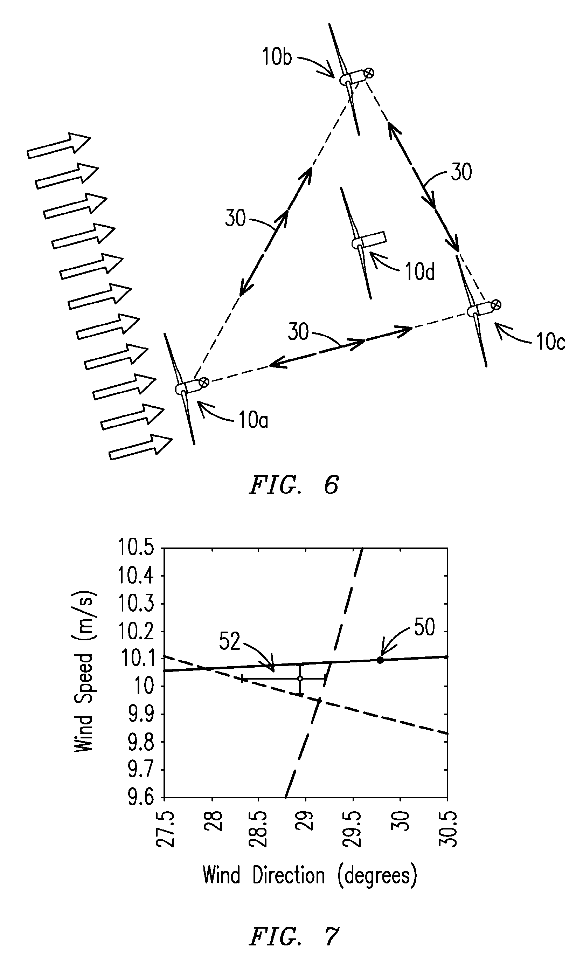

Even with noise interference influencing the measured quantities, for example arising from a laser's frequency-locking ability, the reconstruction of the original wind velocity from the measured quantities may result in a sufficiently accurate estimate. As shown graphically in FIG. 7 for a simulated noise situation, a random noise was assigned to the measured frequency shift to simulate an error in the laser's frequency-locking ability. In this simulation 500 kHz of frequency noise was added. The dot 50 in FIG. 7 represents the true wind speed and direction for this simulation, whereas the three lines converge slightly away from this true wind speed at convergence point 52. The extent of such an error can be taken into account in the calculations for the reconstruction of the original wind velocity. For example, a small error may be disregarded as insignificant whereas a large error may result in discarding the data. The amount of error may comprise a quality control step in the method and system herein, with predetermined thresholds for a maximum acceptable noise or statistical weighing.

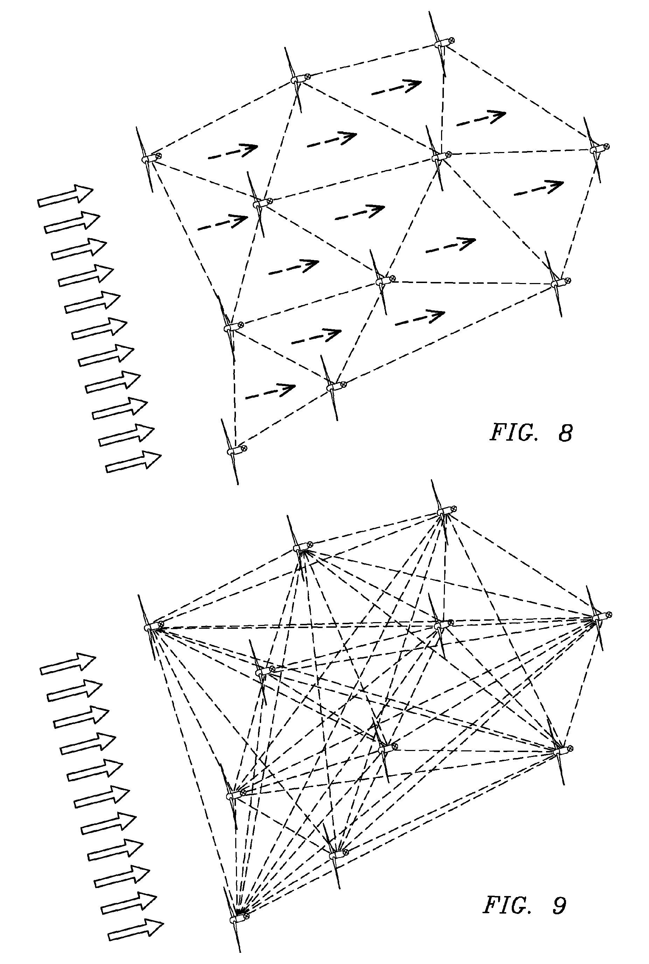

The method can also be extended beyond the three turbines shown in FIG. 4 to include additional or all of the wind turbines within a wind farm and/or locations of other instruments such as on meteorological towers. FIG. 8 shows an example incorporating a plurality of measurements from a plurality of neighboring turbines over a wind farm to approximately reconstruct a 2-dimensional wind-velocity field. Constructed as a 2D mesh of triangular elements, this collection of turbines (vertices) and connecting paths (edges) defines the 2D wind-velocity field. By considering some or all of the reconstructed original wind velocity calculations derived from the measured quantities, a better understanding of the wind resources across the entire wind farm is achieved.

By extending the connecting paths to incorporate even more measurements between some or all the turbines within a wind-farm, an even more complex mesh network may be constructed as shown in FIG. 9. As shown therein, the number of measurements may become very large with an increased number of turbines. In this manner, the wind speed can be measured for a first large area with a first group of three towers, and then the wind speed can be measured for a second smaller area that is within the first area with a second group of three towers. This second measurement can be used to verify the accuracy of the first measurement and can also be used to measure local variations of wind speed within the wind farm area. Such nested measurements may be useful for following and predicting the path of local wind gusts within the wind farm, as is described more fully below.

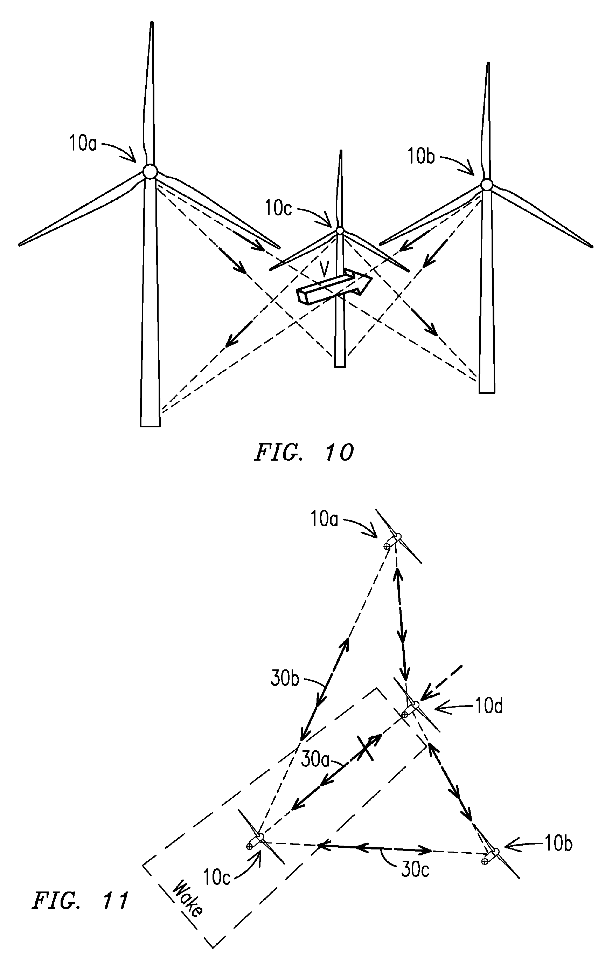

Additionally, the method can include measuring a 3-dimensional (3D) wind-velocity field V between turbines 10a, 10b, 10c, by positioning lasers and optical sensors at different heights along the turbine's tower, as shown in FIG. 10.

Prior art point measurements of wind speed are subject to error not only from local wind disturbances caused by the tower/nacelle on which the instrument is mounted, but also as a result of the disturbance or wake caused by an adjacent wind turbine located directly upwind from the turbine on which the instrument is mounted. As shown in FIG. 11, the network of instruments described herein may be used to avoid errors from turbine wake effects. In the embodiments herein using Doppler anemometry techniques, instead of a wind turbine's wake completely corrupting a measurement 30a when the wind direction (and therefore wake's direction) is in alignment with the line connecting two neighboring turbines, other measurements 30b, 30c from the network may be used to provide a supportive measurement as an alternative. As shown in Figure 11, measurements from two neighboring turbines 10a,10b can be used to deduce the wind velocity at the affected turbine 10c that happens to be in the wake of turbine 10d. It is well-known which wind directions would create an interfering wake effect for each turbine, so this alternative method could easily be employed into a network incorporating this measurement scheme.

Advantageously, other measurements can be derived from the wind-speed measurements acquired by the method herein. For example, from the average time it takes sound to traverse the line connecting the turbines, the local speed of sound may be determined. From this measurement of the speed of sound, temperature of the air can be derived. For instance, at normal atmospheric pressure, the temperature dependence of the speed of a sound wave through dry air is approximated by the following equation: v = 331 m/s + (0.6 m/s/C)•T where T is the temperature of the air in degrees Celsius (which is reasonably accurate for temperatures between 0 and 100 Celsius). Other equations exist that are based upon theoretical reasoning and provide accurate data for all temperatures.

Advantages of the system and method are numerous. In addition to the immediate benefits of such an implementation, the data acquired from this turbine network would also be of long-term value to atmospheric meteorologists and aerodynamicists interested in Planetary Boundary Layer atmospherics. The use of data assimilation in neural networks and other computational models would allow for an ever-increasing forecasting accuracy, as it would allow time for statistics to be built up and time for neural networks to "learn".

As mentioned earlier there are several immediate benefits that can be had through the implementation of such a network of measurements:

Short-Term Forecasting allows for power-output prediction techniques. This can be in the form of Neural-Network / Statistical Forecasting where an array of wind speed measurements having been made, a neural network, or any other statistically-driven analysis technique, may be employed in order to (a) recognize the patterns associated with the measurements of the park and predict the wind-velocity field in the short-term future, or (b) incorporate such measurements into a wind-forecasting tool that would use appropriate atmospheric physics and aerodynamics to predict the short-term future of the wind-velocity field. Other techniques include Wavefront Prediction where one may use measurements of the wind-velocity field from upstream turbines to predict, in the near-future, the wind-velocity field of downstream turbines.

The measurements may also be useful for service and repair operations. For example, one may be able to make a short-term service-window forecast based on measurements within the turbine network. This is useful for small service operations, such as for allowing a turbine to unwind (as it must from time to time to unwind connection cables, after accruing several turns).

The measurements may also be useful for improved aerodynamic performance of individual turbines. Specifically, with immediate knowledge of wind speed inflow, a turbine may be able to accelerate / decelerate rotationally in order to track optimal control settings and therefore optimal aerodynamic flow over the turbine.

Similarly, the measurements may also be useful for mitigation of high-loading / high-noise events such that, with immediate knowledge of wind speed inflow, a turbine may be able to yaw out of the wind, stop rotation, or pitch blades in advance of detrimental wind gusts. Or, the turbine may be controlled to spin slower or pitch blades in advance of a wind gust for acoustic-noise reasons.

This method and system will also provide for a more appropriate measure of the wind inflow to the turbine instead of currently used single-turbine anemometer / wind vane. Current use of an anemometer / wind vane pair mounted on the back end of the turbine's nacelle, behind the rotor plane has disadvantages in that this area is known to be aerodynamically-chaotic and has shown problems and limitations. The method and system of the present embodiments that characterize the wind flow in the vicinity of the turbine would provide a much more representative measurement of the wind flow impinging the turbine's rotor plane, because the method and system herein rely on measurements from a large area surrounding the turbine, as opposed to a single point-source measurement.

Advantageously, the method and system herein provides a means of averaging out local variations in the wind that would normally corrupt a point-source anemometer / wind-vane measurement.

In addition to forecasting techniques, one may also use the data collected by the turbine network of measurements herein to perform a power-performance analysis of individual turbines. To do this, a compilation of power-performance and wind-inflow data over a long-enough period of time may be used in order to assemble a properly-measured power curve. Using common power-performance assessment techniques, decreased power production over time is monitored and diagnosed, indicating scenarios such that the blade of a wind turbine needs to be cleaned, or assessing damage to the blade's surface. Similarly, it may used to assemble statistics regarding the power produced relative to a guaranteed sales power curve.

It is contemplated herein that the wind measurement instruments comprising laser/sonar transmitter/receiver pairs are preferably mounted at or near hub height on the turbines or associated towers. Known alignment techniques may be used to align/adjust the transmitted/receiver pairs. Power for driving these instruments may be derived from the turbine/grid or other known techniques for providing power. Communications may include wired or wireless communication means as known in the art. Data may be collected in real-time. Data storage for measurements may include various known computer readable media forms. The wind measurement instruments herein may be part of larger measurement systems that further include, for example, transducers, signal conditioners, recorders, communication devices, and/or computer processors. The instruments typically measure signals at a predetermined sampling rate which can be a function of a particular data recording and collection system. Additional sensor measurements may be acquired and included in the calculations, including temperature, humidity, and the like. Typical data recording and collection systems include data loggers or data acquisition using computers. Data produced by the data recording and collection system is analyzed by a computer processor to provide a number of useful results (e.g., wind-velocity, wind-shear, turbulence, average wind-velocity, temperature) for the operation of the wind farm and forecasting. Both raw and analyzed data may be transmitted to further computer systems for further analysis, including numerical weather prediction models, statistical analysis systems, neural networks, and the like. Data from other sources (such as meteorological data, historical data) may be combined with the data collected at the wind-farm. Data may be displayed and stored as known in the art.

Based on the foregoing specification, the invention may be implemented using computer programming or engineering techniques including computer software, firmware, hardware or any combination or subset thereof. Any such resulting program, having computer-readable code means, may be embodied or provided within one or more computer-readable media, thereby making a computer program product, i.e., an article of manufacture, according to the invention. The computer readable media may be, for instance, a fixed (hard) drive, diskette, optical disk, magnetic tape, semiconductor memory such as read-only memory (ROM), etc.

One skilled in the art of computer science will easily be able to combine the software created as described with appropriate general purpose or special purpose computer hardware to create a computer system or computer sub-system embodying the method of the invention. An apparatus for making, using or selling the invention may be one or more processing systems including, but not limited to, sensors, a central processing unit (CPU), memory, storage devices, communication links and devices, servers, I/O devices, or any sub-components of one or more processing systems, including software, firmware, hardware or any combination or subset thereof, which embody the invention. User input may be received from the keyboard, mouse, pen, voice, touch screen, or any other means by which a human can input data into a computer, including through other programs such as application programs. Output may comprise a computer monitor, television, LCD, LED, or any other means to convey information to the user.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A method implemented on a wind farm having of a plurality of spatially distributed wind turbines, comprising:
acquiring data via measurement instruments mounted on a plurality of selected pairs of turbines of a wind farm, the data being responsive to a characteristic of energy conveyed along paths between the selected pairs of turbines; and
determining a wind velocity field of the wind farm from the data.

2. The method of claim 1 wherein determining the wind velocity field of the wind farm from the data comprises:
calculating a wind speed between the selected pairs of the turbines from the acquired data;
assigning a directional component to the calculated wind speed based on a respective path between the selected pairs of the turbines; and
determining the wind velocity field between at least three turbines from the wind-speed and directional components.

3. The method of claim 1 wherein the measurement instruments comprise laser- based instruments comprising a laser transmitter and receiver pair used to measure a speed of a medium there between.

4. The method of claim 1 wherein the measurement instruments comprise acoustic-based instruments comprising a sonic transmitter and receiver pair used to measure a speed of a medium there between.

5. The method of claim 3 wherein the laser-based instruments comprise Laser Doppler Anemometry (LDA) instruments.

6. The method of claim 4 wherein the acoustic-based instruments comprise Sonic Anemometry instruments.

7. The method of claim 4 further comprising deriving an air temperature measurement from a speed of sound measurement acquired by the acoustic-based instrument.

8. The method of claim 1 further comprising inferring a wind-velocity at a turbine located between at least three turbines from the acquired data.

9. The method of claim 1 wherein the selected pairs of turbines of the wind-farm comprise a set of turbines that form a plurality of connected paths that represent a mesh network, wherein the turbines represent vertices of the mesh network and connecting paths between the turbines represent edges of the mesh network, such that the mesh network defines a two-dimensional wind-velocity field across the set of turbines.

10. The method of claim 1 wherein the selected pairs of turbines of the wind-farm comprise a network of connected paths between substantially all of the turbines in the wind-farm.

11. The method of claim 1 wherein the measurement instruments mounted on selected pairs of turbines are mounted at or near a hub height.

12. The method of claim 1 further comprising acquiring data from measurement instruments mounted on one or more meteorological masts.

13. The method of claim 1 further comprising calculating a three-dimensional wind-velocity field from the acquired data from measurement instruments mounted on selected pairs of turbines at different heights.

14. The method of claim 1 further comprising utilizing the determined wind velocity field to infer a wind velocity at a turbine located in a wake of another turbine.

15. The method of claim 1 further comprising utilizing the determined wind velocity field for control of at least one turbine or the entire wind farm.

16. The method of claim 1 further comprising utilizing the determined wind velocity field for output power forecasting of at least one turbine or the entire wind farm.

17. A method associated with a wind farm having a plurality of spatially distributed wind turbines, the method comprising:
conveying energy along a plurality of paths within a wind farm;
acquiring data related to the conveyed energy; and
characterizing a wind field within the wind farm from the acquired data.

18. The method of claim 17, wherein conveying energy comprises utilizing measurement instruments comprising transmitter and receiver pairs on selected pairs of turbines that transmit and receive energy conveyed along respective paths between the selected pairs of turbines.

19. The method of claim 18, wherein characterizing the wind field within the wind farm from the acquired data comprises:
calculating a wind speed between the selected pairs of turbines from the acquired data;
determining a directional component for each of the respective paths between the selected pairs of the turbines; and
characterizing the wind velocity field from the wind-speed and directional components.

20. A system for acquiring wind velocity field measurements on a wind farm having of a plurality of spatially distributed wind turbines, comprising:
measurement instruments associated with selected pairs of turbines of a wind-farm, the measurement instruments operative to convey energy along respective paths between the selected pairs of turbines and acquire data from the conveyed energy; and
a data processing device for receiving the acquired data and determining a wind velocity field from the data.

21. The system of claim 20 wherein the data processing device is operative to calculate a wind speed between the selected pairs of turbines from the acquired data; to determine a directional component for each of the respective paths between the selected pairs of turbines; and to determine the wind velocity field from the wind-speed and directional components.
